Europäisches Patentamt

European Patent Office

Office européen des brevets

(19)

(11) **EP 0 595 081 B1**

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int Cl.6: **C09K 3/14**, C04B 35/10

(21) Anmeldenummer: **93116149.1**

(22) Anmeldetag: **06.10.1993**

(54) **Schleifkorn auf der Basis von Zirkonkorund, Verfahren zu seiner Herstellung und dessen Verwendung**

Zirconia-Corundum abrasive grains, process for their production, and use thereof

Particules abrasives à base de zircone-corindun, procédé de fabrication, et leur utilisation

(84) Benannte Vertragsstaaten:
**AT CH DE DK ES FR GB IT LI PT**

(30) Priorität: **19.10.1992 DE 4235134**
**05.03.1993 DE 4306966**

(43) Veröffentlichungstag der Anmeldung:
**04.05.1994 Patentblatt 1994/18**

(73) Patentinhaber: **KORUND LAUFENBURG GmbH**
**79725 Laufenburg (DE)**

(72) Erfinder:
- **Möltgen, Paul, Dr.**
  **D-79725 Laufenburg (DE)**
- **Gallmann, Wolfgang**
  **D-79730 Murg (DE)**

(74) Vertreter: **Steiling, Lothar, Dr. et al**
**Bayer AG**
**Konzernbereich RP**
**Patente und Lizenzen**
**51368 Leverkusen (DE)**

(56) Entgegenhaltungen:
**EP-A- 0 480 678**  **GB-A- 2 062 666**
**US-A- 5 061 665**

- **PATENT ABSTRACTS OF JAPAN vol. 009, no. 096 (C-278)25. April 1985 & JP-A-59 227 726 (NIHON KENMAZAI) 21. Dezember 1984 & DATABASE WPI Week 8506, Derwent Publications Ltd., London, GB; AN 85-034234**
- **DATABASE WPI Week 8506, Derwent Publication Ltd., London, GB; AN 85-034234**
- **PATENT ABSTRACTS OF JAPAN vol. 009, no. 096 (C-278)25. April 1985 & JP-A-59 227 726**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Schleifkorn auf der Basis von $\alpha$-$Al_2O_3$ und $ZrO_2$ mit einem Gehalt an Titanverbindungen in Form von Suboxiden, Carbiden und/oder Oxycarbiden, Verfahren zu seiner Herstellung und dessen Verwendung.

Zirkonkorunde, die durch extrem rasches Abkühlen einer Schmelze hergestellt werden, zeichnen sich durch besonders vorteilhafte Schleifeigenschaften aus.

So wird in der DE-A 2 519 569 ein Schleifmaterial auf Basis von $Al_2O_3$ und $ZrO_2$, gegebenenfalls mit Begleitstoffen oder Zusätzen, bestehend aus Chrom, Eisen, Titan, Vanadin, Magnesium und/oder Seltene Erden in Form von Oxiden, Carbiden, Carbonitriden und Nitriden für den Einsatz im Präzisionsschleifen oder Halbpräzisionsschleifen beschrieben. Die Zusätze dienen nicht zur Erhöhung der Schleifleistung sondern sollen möglichst gering gehalten werden, um eine Qualitätsminderung zu vermeiden.

In der DE-A 2 160 705 wird ein Schleifkorn beschrieben, das durch Schmelzen einer Mischung aus $Al_2O_3$ mit einem Zusatz von 5 bis 45 Gew.-% $ZrO_2$, bevorzugt 25 Gew.-% $ZrO_2$ und 0 bis 4 Gew.-% $TiO_2$ hergestellt wird.

In der DE-A 2 227 462 wird ein Zirkonkorund beschrieben, der durch Eingießen einer unter reduzierenden Bedingungen hergestellten Schmelze aus $Al_2O_3$ und $ZrO_2$ zwischen Metallplatten extrem rasch abgekühlt wird und sich aufgrund des dadurch stabilisierten Kristallitgefüges und des Anteils an tetragonaler Hochtemperaturmodifikation des $ZrO_2$ gut für den Einsatz in Schleifmitteln eignet.

Die beim Schleifprozeß ablaufende Phasenumwandlung des $ZrO_2$ von der tetragonalen Hochtemperaturmodifikation in die monokline, bei Raumtemperatur stabile Form bewirkt aufgrund der dabei entstehenden Volumenvergrößerung das Auftreten von umwandlungsindizierten Mikrorissen, die eine Werkstoffverstärkung durch Energiedissipation nach sich ziehen.

In der DE-A 3 040 992 wird ein Zirkonkorund beschrieben mit einem Anteil von 27 bis 35 Gew.-% $ZrO_2$, der weiterhin, ausgedrückt als $TiO_2$, 1 bis 10 Gew.-% an Oxycarbiden, Carbiden oder Suboxiden des Titans enthält, die durch Reduktion von $TiO_2$ erhalten wurden. Die Schleifleistung dieses Korns wird als gleich oder besser als die des in der DE-A 2 227 642 beschriebenen Korns charakterisiert. Der Vorteil dieses Korns wird aber vor allem in der Senkung der Herstellkosten bei vergleichbarer Schleifleistung gesehen, die durch die Reduzierung der $ZrO_2$-Anteils erreicht wird.

Der Mechanismus, der dieser Verbesserung der Eigenschaften des Schleifkorns durch die Titanverbindungen zugrundeliegt, ist weitgehend ungeklärt. Man vermutet in der DE-A 3 040 992 eine direkte Beeinflussung des Schleifprozesses durch die Titanverbindungen, die aktiv am Schleifprozeß teilnehmen sollen.

Sowohl die DE-A 3 040 992 als auch die DE-A 2 227 642 offenbaren Schleifkörner, deren Anteile an tetragonaler $ZrO_2$-Modifikation mindestens 25 Gew.-%, bezogen auf den $ZrO_2$-Gehalt, betragen.

In der US-A-5 143 522 wird ein Schleifkorn beschrieben mit einem Anteil von 20 bis 50 Gew.-% $ZrO_2$, wovon mehr als 25 % in der tetragonalen Form vorliegen, 1 bis 10 Gew.-% reduziertem Titanoxid in der Form von Suboxiden, Carbiden oder Oxycarbiden, 0,03 bis 0,5 Gew.-% Kohlenstoff, weniger als 3 Gew.-% Verunreinigungen und $Al_2O_3$ als Hauptbestandteil. Die Struktur des Korns wird als Einlagerungen von $Al_2O_3$-Primärkristallen in eine eutektische Aluminiumoxid-Zirkonoxid-Matrix beschrieben. Die Größe der Primärkristalle liegt zwischen 5 und 50 micron. Der Anteil der $ZrO_2$ in der tetragonalen Kristallform beträgt bis zu ca. 75 %.

Im japanischen Patent 1 614 974 (Appl. Nr. Sho 58-102 289) werden titanoxidhaltige Zirkonkorunde beschrieben, deren $ZrO_2$-Anteile bis zu 100 % in der tetragonalen Modifikation vorliegen. Aus diesem Patent geht hervor, daß ausschließlich das ebenfalls zugesetzte $Y_2O_3$ für die Stabilisierung und Anreicherung der tetragonalen Phase verantwortlich ist. So lassen die in der Patentschrift aufgeführten Beispiele lediglich bei den mit $Y_2O_3$ dotierten Mustern eine Steigerung gegenüber dem undotierten Standard erkennen.

Der Zusatz von $Y_2O_3$ verteuert die Herstellung des Schleifkorns. Zu einer Einschränkung der durch die hohen Anteile an tetragonaler $ZrO_2$-Modifikation verbesserten Schleifleistung kommt es auch dadurch, daß $Y_2O_3$ oder $Y_2O_3$-haltige Verbindungen selbst keine Eigenschaften haben, die für den Schleifprozeß vorteilhaft sind.

Aufgabe der vorliegenden Erfindung ist es, ein Zirkonkorundschleifkorn zur Verfügung zu stellen, das leistungsmäßig eine Verbesserung der bisher bekannten Zirkonkorunde darstellt, ohne daß sich die Herstellung im Vergleich zu den konventionellen Zirkonkorunden verteuert, so daß beim Einsatz des erfindungsgemäßen Schleifkorns für viele Schleifoperationen ein noch günstigeres Preis/Leistungs-Verhältnis erreicht werden kann als es nach dem bekannten Stand der Technik möglich war.

Überraschenderweise wurde gefunden, daß durch Zugabe von geringen Mengen an $TiO_2$ zu einer $Al_2O_3$/$ZrO_2$-Mischung, Schmelzen dieser Mischung in Gegenwart von Reduktionsmitteln und plötzliches Abschrecken dieser Schmelze die Anteile an tetragonaler $ZrO_2$-Modifikation drastisch erhöht werden können. Dabei zeigt sich eine lineare Abhängigkeit zwischen der $TiO_2$-Menge und dem Anteil tetragonaler Phase.

Auf diese Weise ist ein Schleifkorn auf der Basis von $\alpha$-$Al_2O_3$ und $ZrO_2$ mit einem Gehalt an Titanverbindungen in Form von Suboxiden, Carbiden und/oder Oxycarbiden erhältlich, welches einen $ZrO_2$-Gehalt von 35 bis 50 Gew.-% aufweist, wobei mehr als 90 Gew.-% des $ZrO_2$ in der tetragonalen Kristallform vorliegen, die Menge an Titanverbin-

dungen, gerechnet als $TiO_2$, 2,5 bis 5 Gew.-% und der Gehalt an Verunreinigungen, gerechnet als Oxide, höchstens 3 Gew.-%, der Gehalt an Seltenen Erden, gerechnet als Oxide höchstens 0,1 Gew.-%, betragen. Ein solches Schleifkorn ist dadurch erhältlich, daß eine der Zusammensetzung des Schleifkorns entsprechende Mischung aus $\alpha$-$Al_2O_3$, $ZrO_2$ und $TiO_2$ und/oder diese enthaltenden Rohstoffe in Gegenwart von Reduktionsmitteln geschmolzen und so abgeschreckt wird, daß die Schmelze in weniger als 10 Sekunden vollständig erstarrt. Ein solches Schleifkorn ist Gegenstand dieser Erfindung. Das erfindungsgemäße Schleifkorn zeichnet sich durch außergewöhnlich gute Schleifleistungen aus.

Ein besonders bevorzugter Mischungsbereich der $Al_2O_3$-Schmelze liegt dabei in der Nähe des Eutektikums (zwischen 37 und 45 Gew.-% $ZrO_2$, bezogen auf die Summe von $ZrO_2$ und $Al_2O_3$). In diesem Bereich gelingt es, besonders hohe Anteile an tetragonaler $ZrO_2$-Modifikation zu stabilisieren.

$TiO_2$ oder andere Ti-Verbindungen sind in der Literatur nicht als Stabilisatoren für die Hochtemperaturmodifikation des $ZrO_2$ beschrieben. Üblicherweise werden hierfür CaO, MgO, $Y_2O_3$ oder andere Oxide der Seltenen Erden eingesetzt.

Vergleichende Versuche mit diesen Stabilisatoren haben überraschenderweise gezeigt, daß im System $\alpha$-$Al_2O_3$ / $ZrO_2$ die stabilisierende Wirkung von Titanverbindungen in der Form als Suboxide, Carbide und/oder Oxycarbide wirkungsvoller ist als die der bekannten Stabilisatoren MgO und CaO. Lediglich $Y_2O_3$ übertrifft die reduzierte Form von $TiO_2$ in seiner stabilisierenden Wirkung für $ZrO_2$.

Überraschenderweise wurde festgestellt, daß die besten Schleifresultate mit einem Korn mit einem möglichst hohen Anteil an tetragonaler $ZrO_2$-Phase aber mit einem gleichzeitig nicht zu hohen Gehalt an Ti-Verbindungen erzielt werden.

Ein hoher Gehalt an Ti-Verbindungen verändert offensichtlich die Viskosität der Schmelze und erschwert das gleichmäßige und schnelle Abschrecken, so daß das im Idealfall völlig homogene, eutektische Gefüge aus $ZrO_2$ und $\alpha$-$Al_2O_3$-Kristallen mit einer Kristallitgröße im Submicron-Bereich zunehmend durch Ausseigerungen, die auf den ungenügenden Abschreckeffekt zurückzuführen sind, gestört wird.

Derartige Ausseigerungen verändern die Eigenschaften des Korns und verschlechtern die Schleifleistungen der daraus gefertigten Schleifmaterialien.

Angestrebt ist eine Struktur, die vollständig als Eutektikum vorliegt. Die Praxis zeigt jedoch, daß sich geringfügige Ausseigerungen selbst bei optimalen Abschreckbedingungen nicht vermeiden lassen, da der Zirkonkorund, als hervorragender Isolator, ein völlig gleichzeitiges Erstarren der Schmelze nicht zuläßt.

Der Gehalt an Verunreinigungen, gerechnet als Oxide, höchstens 3 Gew.-% beträgt. Der Gehalt an Seltenen Erden, gerechnet als Oxide, beträgt höchstens 0,1 Gew.-%.

Die überraschend guten Schleifresultate, die mit den erfindungsgemäßen Schleifkörnern erzielt werden können, liegen deutlich über den bekannten Zirkonkorunden mit vergleichbaren Anteilen an tetragonaler $ZrO_2$-Phase. Dies liegt den Schluß nahe, daß die Titanverbindungen in Form von Carbiden, Suboxiden und/oder Oxycarbiden aktiv am Schleifprozeß teilnehmen.

Gegenstand dieser Erfindung ist auch ein Verfahren zur Herstellung des erfindungsgemäßen Schleifkorns. Dies ist dadurch gekennzeichnet, daß eine der Zusammensetzung des Schleifkorns entsprechende Mischung aus $Al_2O_3$, $ZrO_2$ und $TiO_2$ und/oder diese Stoffe enthaltende Rohstoffe in Gegenwart von Reduktionsmitteln geschmolzen und abgeschreckt werden. Die Abschreckung sollte vorzugsweise so erfolgen, daß die Schmelze in nicht mehr als 10 Sekunden vollständig erstarrt. Anschließend sollte das Material nicht mehr Temperaturen oberhalb von ca. 700°C ausgesetzt werden, um eine Phasenumwandlung des in der tetragonalen Phase vorliegenden $ZrO_2$ in die monokline Modifikation zu vermeiden.

Besonders wirtschaftlich läßt sich das Verfahren durchführen, indem man natürliche Rohstoffe zur Schmelze einsetzt, wie insbesondere Tonerde, Bauxit, Baddeleyit, Zirkonsand, Rutil und Ilmenit.

Bevorzugt wird beim erfindungsgemäßen Verfahren dabei als Reduktionsmittel Kohlenstoff in Form von Graphit oder Koks eingesetzt.

Gegenstand dieser Erfindung ist auch die Verwendung des erfindungsgemäßen Schleifkorns für den Einsatz in gebundenen Schleifmitteln und Schleifmitteln auf Unterlagen.

Im folgenden soll die Erfindung beispielhaft erläutert werden, ohne daß darin eine Einschränkung zu sehen ist.

Beispiel 1

Eine Mischung aus 240 kg Tonerde, 170 kg Baddeleyit und 12 kg Petrolkoks wurde mit 0, 0,5, 1, 2,5, 5 bzw. 10 Gew.-% $TiO_2$ (Rutil), bezogen auf die Summe der Einzelkomponenten versetzt und jeweils im elektrischen Lichtbogenofen geschmolzen. Das Ofengefäß hatte einen Durchmesser von 2 m, die Spannung betrug 110 V und die Belastung wurde mit 1100 kWh gewählt. Die flüssige Schmelze wurde durch Eingießen in einen ca. 5 mm breiten Spalt zwischen Metallplatten auf Temperaturen unterhalb 600°C abgeschreckt.

In der Tabelle 1 sind die so gewonnenen Produkte charakterisiert:

EP 0 595 081 B1

Tabelle 1

| Versuch-Nr. | TiO$_2$ (%) als Rutil | analytisch gefundene Werte (%) | | T (%) = Anteile an tetragonaler Phase bezogen auf ZrO$_2$ gesamt |
|---|---|---|---|---|
| | | TiO$_2$ | ZrO$_2$ | |
| 1 (Vergleich) | - | 0,15 | 41,6 | 46 |
| 2 ( " ) | 0,5 | 0,63 | 42,4 | 55 |
| 3 ( " ) | 1,0 | 1,08 | 43,1 | 78 |
| 4 (Erfindung) | 2,5 | 2,72 | 41,2 | 97 |
| 5 ( " ) | 5,0 | 4,98 | 40,8 | 100 |
| 6 (Vergleich) | 10,0 | 9,82 | 39,5 | 100 |

Die Anteile an tetragonaler Phase wurden entsprechend der Gleichung

$$T \text{ (Gew.-\%)} = \frac{2\,t \times 100}{2\,t + m1 + m2} \text{ berechnet.}$$

Die Gleichung basiert auf der Röntgenbeugungsanalyse von Zirkonkorundpulvern (Röntgendiffraktogramme).

t = Intensität des tetragonalen Peak bei Theta = 30,3
m1 = Intensität des monoklinen Peak bei Theta = 28,3
m2 = Intensität des monoklinen Peak bei Theta = 31,5

Die verschiedenen Materialien wurden in der Körnung P 36 in Schleifbändern bei einem Anpreßdruck von 70 N gegen 42CrMo4 getestet. Die Schleifzeit betrug jeweils 12 Minuten.

Tabelle 2

| Versuch-Nr. | Abschliff | Schleifleistung (%) bezogen auf den bisherigen Stand der Technik (Versuch-Nr. 1) |
|---|---|---|
| 1 | 937,6 | 100 |
| 2 | 965,1 | 103 |
| 3 | 1105,6 | 118 |
| 4 | 1386,7 | 148 |
| 5 | 1236,8 | 132 |
| 6 | 1189,9 | 127 |

Beispiel 2

Zu einer Mischung aus 240 kg Tonerde, 170 kg Baddeleyit und 12 kg Petrolkoks wurden jeweils 1 % TiO$_2$, Y$_2$O$_3$, CaO oder MgO zugegeben. Die Schmelz- und Abkühlbedingungen waren wie in Beispiel 1.

In der Tabelle 3 sind die so gewonnenen Produkte charakterisiert:

Tabelle 3

| Versuch-Nr. | eingesetzte Stabilisatoren in % bezogen auf die Summe der Einzelkomponenten | | | | T (%) |
|---|---|---|---|---|---|
| | TiO$_2$ | Y$_2$O$_3$ | CaO | MgO | |
| 7 (Vergleich) | 1 | - | - | - | 76 |
| 8 (Vergleich) | - | 1 | - | - | 96 |
| 9 (Vergleich) | - | - | 1 | - | 56 |
| 10 (Vergleich) | - | - | - | 1 | 42 |

Die Schleiftests wurden unter den gleichen Bedingungen wie in Beispiel 1 durchgeführt. Um einen direkten Vergleich zu ermöglichen, wurde als Standard ein Muster gemäß Versuch-Nr. 1 (undotiert) mitgeschliffen.

4

Tabelle 4

| Schleiftest | | |
|---|---|---|
| Versuch-Nr. | Abschliff (%) | Schleifleistung (%) |
| 1 (Vergleich) | 953,7 | 100 |
| 7 ( " ) | 1200,8 | 126 |
| 8 ( " ) | 1115,8 | 117 |
| 9 ( " ) | 638,5 | 67 |
| 10 ( " ) | 933,9 | 98 |

Beispiel 3

Zu einer Mischung aus 240 kg Tonerde, 170 kg Baddeleyit und 11 kg Rutil wurde ohne Zugabe von Kohle als Reduktionsmittel unter den Bedingungen der Beispiele 1 und 2 geschmolzen und abgeschreckt (Versuch 11).

Im Versuch 12 wurden wie üblich 12 kg Petrolkoks zugesetzt, die Schmelzbedingungen wurden wie in den anderen Beispielen gewählt, die Schmelze wurde aber nicht abgeschreckt, sondern in einen offenen Tiegel abgegossen.

Zum direkten Vergleich wird in der Tabelle 5 der Versuch 4 aus Beispiel 1 angeführt.

Tabelle 5

| Versuch-Nr. | eingesetzte Zusätze | | Abkühlbedingungen | T (%) |
|---|---|---|---|---|
| | $TiO_2$ | C | | |
| 4 (Erfindung) | 2,5 % | 2,8 % | Abschrecken | 96 |
| 11 (Vergleich) | 2,5 % | - | Abschrecken | 36 |
| 12 (Vergleich) | 2,5 % | 2,8 % | langsames Abkühlen | 42 |

Mit den Versuchsmaterialien aus Beispiel 3 wurden keine Schleiftests durchgeführt.

**Patentansprüche**

1. Schleifkorn auf der Basis von $\alpha$-$Al_2O_3$ und $ZrO_2$ mit einem Gehalt an Titanverbindungen in Form von Suboxiden, Carbiden und/oder Oxycarbiden, wobei der $ZrO_2$-Gehalt 35 bis 50 Gew.-% beträgt, wobei mehr als 90 Gew.-% des $ZrO_2$ in der tetragonalen Kristallform vorliegen, die Menge an Titanverbindungen, gerechnet als $TiO_2$, 2,5 bis 5 Gew.-% und der Gehalt an Verunreinigungen, gerechnet als Oxide, höchstens 3 Gew.-%, der Gehalt an Seltenen Erden, gerechnet als Oxide, höchstens 0,1 Gew.-% betragen, dadurch erhältlich, daß eine der Zusammensetzung des Schleifkorns entsprechende Mischung aus $\alpha$-$Al_2O_3$, $ZrO_2$ und $TiO_2$ und/oder diese enthaltenden Rohstoffe in Gegenwart von Reduktionsmitteln geschmolzen und so abgeschreckt wird, daß die Schmelze in weniger als 10 Sekunden vollständig erstarrt.

2. Schleifkorn gemäß Anspruch 1, dadurch gekennzeichnet, daß der Gehalt an Verunreinigungen, gerechnet als Oxide, höchstens 3 Gew.-% beträgt.

3. Verfahren zur Herstellung eines Schleifkorns gemäß einem der Ansprüche 1 oder 2, dadurch gekennzeichnet, daß eine Mischung aus $Al_2O_3$, $ZrO_2$ und $TiO_2$ und/oder diese enthaltenden Rohstoffe in Gegenwart von Reduktionsmitteln geschmolzen und so abgeschreckt wird, daß die Schmelze in weniger als 10 Sekunden vollständig erstarrt.

4. Verfahren gemäß Anspruch 3, dadurch gekennzeichnet, daß die Rohstoffe Tonerde, Baddeleyit, Zirkonsand und/oder Rutil sind.

5. Verfahren gemäß einem der Ansprüche 3 oder 4, dadurch gekennzeichnet, daß als Reduktionsmittel Kohlenstoff eingesetzt wird.

6. Verwendung eines Schleifkorns gemäß der Ansprüche 1 oder 2, für den Einsatz in gebundenen Schleifmitteln und Schleifmitteln auf Unterlagen.

## Revendications

1. Grain abrasif à base d'$\alpha$-$Al_2O_3$ et de $ZrO_2$, contenant des dérivés du titane à l'état de sous-oxydes, de carbures et/ou d'oxycarbures, la teneur en $ZrO_2$ allant de 35 à 50 % en poids, plus de 90 % en poids de ce $ZrO_2$ étant sous la forme cristalline tétragonale, la quantité des dérivés du titane, exprimée en $TiO_2$, étant de 2,5 à 5 % en poids, la teneur en impuretés, exprimée en oxydes, est de 3 % en poids au maximum, la teneur en terres rares, exprimée en oxydes, est de 0,1 % en poids au maximum, ce grain abrasif étant obtenu par fusion en présence d'agents réducteurs d'un mélange d'$\alpha$-$Al_2O_3$, de $ZrO_2$ et de $TiO_2$ et/ou de matières premières contenant ces substances en quantités correspondant à la composition du grain abrasif et refroidissement brutal de la masse fondue, laquelle doit se solidifier totalement en moins de 10 secondes.

2. Grain abrasif selon la revendication 1, caractérisé en ce que la teneur en impuretés exprimée en oxydes est de 3 % en poids au maximum.

3. Procédé pour la préparation d'un grain abrasif selon l'une des revendications 1 ou 2, caractérisé en ce que l'on fond un mélange d'$Al_2O_3$, de $ZrO_2$, de $TiO_2$ et/ou de matières premières contenant ces oxydes en présence d'agents réducteurs et on refroidit brutalement, en sorte que la masse fondue se solidifie totalement en moins de 10 secondes.

4. Procédé selon la revendication 3, caractérisé en ce que les matières premières utilisées sont l'alumine, la baddeleyite, le sable de zirconium et/ou le rutile.

5. Procédé selon l'une des revendications 3 ou 4, caractérisé en ce que l'agent réducteur utilisé est le carbone.

6. Utilisation d'un grain abrasif selon les revendications 1 ou 2, pour l'utilisation dans des produits abrasifs à liants et des produits abrasifs sur supports.

## Claims

1. Abrasive granules based on $\alpha$-$Al_2O_3$ and $ZrO_2$, having a content of titanium compounds in the form of suboxides, carbides and/or oxycarbides, wherein the $ZrO_2$-content is 35 to 50 wt.%, wherein more than 90 wt.% of the $ZrO_2$ is present in the tetragonal crystal form, the quantity of titanium compounds, calculated as $TiO_2$, is 2.5 to 5 wt.%, and the content of impurities, calculated as oxides, is at most 3 wt.%, the content of rare earths, calculated as oxides, is at most 0.1 wt.%, obtainable in that a mixture corresponding to the composition of the abrasive granules composed of $\alpha$-$Al_2O_3$, $ZrO_2$ and $TiO_2$ and/or raw materials containing these is melted in the presence of reducing agents and is so quenched that the melt is completely solidified in less than 10 seconds.

2. Abrasive granules according to claim 1, characterised in that the content of impurities, calculated as oxides, is at most 3 wt.%.

3. Method for manufacturing abrasive granules according to either of claims 1 or 2, characterised in that a mixture composed of $\alpha$-$Al_2O_3$, $ZrO_2$ and $TiO_2$ and/or raw materials containing these is melted in the presence of reducing agents and is so quenched that the melt is completely solidified in less than 10 seconds.

4. Method according to claim 3, characterised in that the raw materials are alumina, baddeleyite, zirconium sand and/or rutile.

5. Method according to one of claims 3 or 4, characterised in that carbon is used as a reducing agent.

6. Use of abrasive granules according to claims 1 or 2 for use in bonded abrasives and abrasives on substrates.